# FASCICULE DE BREVET EUROPEEN

(11) **EP 0 481 881 B1**
(45) Date de publication et mention de la délivrance du brevet: **24.03.1993**
(21) Numéro de dépôt: 91402757.8
(22) Date de dépôt: 15.10.1991
(51) Int. Cl.: G07F 7/10

(54) **Circuit intégré à sécurité d'accès amélioré**
Integrierte Schaltung für verbesserten Zugang
Integrated circuit with improved security access

(30) Priorité: 19.10.1990 FR 9012986
(43) Date de publication de la demande: 22.04.1992
(73) Titulaire: GEMPLUS CARD INTERNATIONAL, F-13420 Gémenos (FR)
(72) Inventeur: Geronimi, François, F-75116 Paris (FR); Sourenian, Paul, F-75116 Paris (FR)
(74) Mandataire: Schmit, Christian Norbert Marie

(56) Documents cités:
- EP-A- 0 341 712
- DE-A- 3 706 466
- US-A- 4 939 353

## Description

L'invention concerne les circuits intégrés pour lesquels une sécurité de fonctionnement doit être assurée contre des tentatives d'utilisation frauduleuse.

C'est le cas notamment de circuits intégrés pour cartes à puces destinées par exemple à assurer des transactions monétaires, ou à permettre l'accès individualisé à des locaux protégés, etc.

Ces circuits intégrés incorporent des informations confidentielles, stockées dans des mémoires, par exemple des mémoires non volatiles programmables et effaçables électriquement. Il est nécessaire que ces informations ne soient pas transmises à l'extérieur du circuit intégré par des manoeuvres frauduleuses.

C'est pourquoi on prévoit en général dans le circuit intégré un certain nombre de capteurs dits capteurs de sécurité, dont la fonction est d'observer un certain nombre de conditions de fonctionnement ou d'environnement et de provoquer une interruption de fonctionnement du circuit lorsque des conditions anormales sont détectées.

Par exemple, il y a un capteur de fréquence observant la fréquence de fonctionnement du circuit et capable de fournir un signal si elle est au dessous d'un seuil déterminé (une fréquence trop basse permettrait à un fraudeur d'espionner plus facilement le comportement du circuit ou de la carte).

De même, il peut y avoir un capteur de tension d'alimentation fournissant un signal si cette tension est trop faible ou trop forte; et encore un capteur de lumière, détectant si le boîtier du circuit intégré est ouvert en vue d'accéder par l'observation à des informations confidentielles. Egalement, toujours à titre d'exemple, un capteur de passivation (présence d'une couche de passivation au dessus du circuit), un capteur de température, etc.

Par conséquent, plusieurs capteurs de sécurité matérielle sont prévus et peuvent chacun délivrer un signal logique représentant l'apparition d'un défaut.

Dans les circuits intégrés à microprocesseur, il est normal de prévoir que le contrôle de sécurité soit effectué par le microprocesseur du circuit lui-même.

On a déjà proposé que les signaux logiques issus des capteurs de sécurité matérielle soient mis en mémoire dans un registre directement contrôlé par le microprocesseur; ce registre est initialement mis à zéro; l'apparition d'un bit non nul à une position du registre signifie qu'une condition anormale de fonctionnement a été observée; le basculement du registre est en principe irréversible, c'est-à-dire qu'un bit stocké dans le registre ne disparaît pas, même si les conditions anormales disparaissent; en pratique, le registre ne peut être remis à zéro que lors de la réinitialisation du circuit intégré (débranchement et remise sous tension).

En principe, les circuits fonctionnent de la manière suivante : au moment de la mise sous tension, le microprocesseur exécute un programme d'initialisation; puis, il effectue un test de sécurité consistant à vérifier l'état du registre de sécurité; si tous les bits sont à zéro, le fonctionnement peut continuer; sinon, le fonctionnement est définitivement interrompu et le circuit doit être mis hors tension.

On s'est cependant rendu compte que la sécurité était insuffisante car des changements ultérieurs pouvaient n'être plus détectés.

Une solution possible serait de prévoir que les programmes de fonctionnement de la carte contiennent tous des instructions de vérification périodique de l'état du registre. Mais, le problème est qu'on va interférer fortement avec le déroulement du programme normal de fonctionnement et qu'il est difficile de prévoir un test du registre aussi souvent qu'il serait nécessaire.

On pourrait aussi prévoir que le registre est connecté à une broche d'interruption de l'unité centrale du microprocesseur, mais ces broches ne sont pas nombreuses et doivent être réservées à d'autres usages.

Selon l'invention, on prévoit dans le circuit intégré des moyens pour tester l'état du registre d'une part avant chaque transmission d'information à l'extérieur du circuit intégré, et d'autre part avant chaque modification d'information dans une mémoire faisant partie du circuit intégré (en général, cette mémoire sera la mémoire non volatile programmable électriquement ou effaçable et programmable électriquement).

L'invention part en effet de la remarque que les circuits intégrés à microprocesseur sont commandés par une mémoire morte (ROM) de programme qui comporte un certain nombre de sous programmes, parmi lesquels un sous programme d'écriture ou d'effacement dans la mémoire, et un sous programme de transmission d'information vers l'extérieur: il est alors facile de placer en tête de chacun de ces sous programmes des instructions de vérification de l'état du registre de sécurité.

Ces programmes sont fréquemment appelés et ils correspondent justement à des actions pour lesquelles la sécurité est importante : risque de transmission d'informations confidentielles à l'extérieur, risque d'écriture ou d'effacement de zones non autorisées de la mémoire. Avec un petit nombre d'instructions de programme, le registre peut être testé et peut interrompre le sous programme dès son début ou immédiatement avant son début.

Par exemple, une mémoire de programme de carte à puce comporte 5000 octets d'instructions exécutables par le microprocesseur; les programmes d'écriture ou d'effacement ou de transmission d'information à l'extérieur comportent par exemple une centaine d'instructions chacun (pour écrire ou transmettre un octet); une vingtaine d'octets supplémentaires peuvent permettre le test avant ces sous programmes.

Ainsi, la mémoire ne consommera qu'un petit nombre d'octets supplémentaires pour assurer une sécurité très efficace puisque la vérification a lieu avant les opérations stratégiques d'écriture et de transmission d'information.

D'autres caractéristiques et avantages de l'invention apparaîtront à la lecture de la description détaillée qui suit et qui est faite en référence aux dessins annexés dans lesquels :
- la figure 1 représente l'organisation générale d'un circuit intégré à microprocesseur concerné par l'invention;
- la figure 2 représente l'organisation des moyens selon l'invention.

Le circuit intégré comporte un microprocesseur, c'est-à-dire une unité centrale de traitement (CPU) 10, et des ressources associées qui peuvent être :
- une mémoire morte 12 (ROM) contenant des instructions exécutables par le microprocesseur;
- une mémoire vive de travail (RAM) 14;
- une mémoire non volatile 16 programmable électriquement (EPROM) et de préférence aussi effaçable électriquement (EEPROM); cette mémoire peut comprendre des données et éventuellement des instructions pour le microprocesseur; elle peut comprendre notamment des données dont le contenu ne doit pas être touché, et des données confidentielles qui ne doivent pas être transmises à l'extérieur du circuit;
- des ports d'entrée sortie 18 permettant notamment de transmettre des informations sur des broches de connexion extérieures E/S du circuit intégré (en général la transmission sera en série sur une seule broche pour minimiser le nombre de broches du circuit, tout au moins dans les applications de cartes à puces).

De plus, le microprocesseur est directement connecté à des registres dont il peut lire le contenu et qu'il peut remettre à zéro.

Parmi ces registres, il y a un registre RS dont les entrées sont connectées à divers capteurs de sécurité (C1, C2, C3, C4 par exemple) tels que ceux qu'on a mentionnés précédemment.

Comme on l'a expliqué, ces capteurs sont destinés à vérifier les conditions d'environnement et de fonctionnement du circuit, dans le but d'empêcher des opérations frauduleuses qui deviendraient possibles si ces conditions devenaient anormales. Des exemples de capteurs ont été donnés ci-dessus.

Ce registre RS sera testé selon l'invention à chaque fois que le programme d'application de la carte (en mémoire ROM ou EEPROM) passera par une opération de transmission d'information vers l'extérieur (par le plot E/S), et aussi à chaque fois que le programme passera par une opération de modification du contenu de la mémoire non volatile 16.

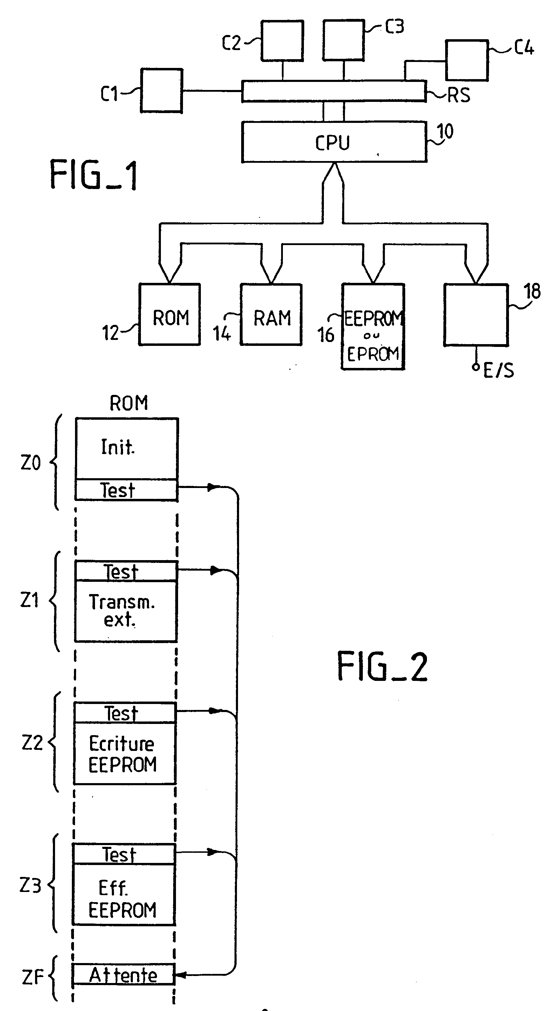

Ces opérations sont régies par le microprocesseur, par l'intermédiaire de sous-programmes stockés dans la mémoire morte ROM 12 qui gère l'ensemble du fonctionnement de la carte. L'organisation de la mémoire morte 12 est symboliquement représentée sur la figure 2.

La mémoire est adressée séquentiellement, de sorte que les instructions mémorisées à des adresses successives sont exécutées successivement, sauf instructions de saut à un emplacement différent de la mémoire.

Une zone de départ de la mémoire, Z0, contient par exemple un programme d'initialisation permettant au microprocesseur d'effectuer des opérations préliminaires après la mise sous tension (opérations parmi lesquelles se trouve notamment la remise à zéro du registre RS). De préférence une opération de test du registre RS est effectuée à la fin du programme d'initialisation. A ce stade, les conditions d'environnement et de fonctionnement du circuit devraient en effet être normales pour que le circuit soit autorisé à fonctionner. Si le test est positif (registre RS à zéro, pas de détection de conditions anormales), le fonctionnement du circuit intégré se poursuit. Si le test est négatif (le registre contient un bit de détection d'une condition anormale), une instruction de branchement vers une zone ZF de la mémoire ROM est exécutée. Dans cette zone ZF est placée une instruction ou une routine plaçant le microprocesseur en attente, attente dont il ne peut sortir que par réinitialisation (débranchement et remise sous tension par exemple).

D'autres zones de la mémoire de programme 12 permettent d'effectuer des opérations diverses. Le microprocesseur peut accéder à la première adresse de chacune de ces zones lorsqu'il reçoit une commande pour exécuter une certaine opération. La zone contient alors la série d'instructions nécessaires à la réalisation de cette opération. C'est par exemple un programme d'application placé dans la mémoire EEPROM 16, programme exécutable par le microprocesseur, qui appelle, quand il en a besoin, des sous programmes placés dans les zones de la mémoire morte 12.

Parmi les opérations possibles il y a la transmission à l'extérieur d'un mot de n bits (par exemple un octet de 8 bits) par le port d'entrée sortie 18. Cette opération est effectuée à l'aide d'un sous programme contenu dans une zone Z1 de la mémoire ROM. Ce sous programme est appelé chaque fois qu'un mot doit être transmis.

Une autre opération exécutée par un sous programme est l'opération d'écriture d'un mot ou d'un bit dans la mémoire programmable non volatile 16. Les instructions correspondantes forment un sous programme placé dans une zone Z2 de la mémoire morte. De même, une opération d'effacement de tout ou partie de la mémoire programmable 16 est effectuée par un sous programme placé dans une zone Z3 de la mémoire morte 12.

Selon l'invention, on prévoit que les premières instructions des zones Z1, Z2 et Z3 sont des instructions de vérification de l'état du registre RS, ce registre étant directement accessible en lecture par le microprocesseur. Si le résultat est positif (conditions normales détectées par les capteurs C1 à C4), le sous programme de la zone Z1, Z2 ou Z3 respectivement se déroule et l'opération correspondante (transmission, écriture ou effacement respectivement) est effectuée; sinon une instruction de branchement vers la zone ZF est exécutée et le microprocesseur est mis en état d'attente définitive.

Etant donné que les instructions nécessaires à la vérification du registre n'occupent que quelques dizaines d'octets, placés en début de deux ou trois zones de sous programmes au maximum, on voit que l'on ne consomme pas trop de mémoire ROM pour assurer une sécurité excellente. Cela est important car la place disponible en mémoire ROM est limitée et doit être réservée à de nombreuses autres opérations essentielles de gestion du fonctionnement du microprocesseur.

## Revendications

1. Circuit intégré à microprocesseur, comportant une mémoire de programme (12), une mémoire non volatile programmable (16), au moins un port d'entrée-sortie (18) pour la connexion vers l'extérieur du circuit, des capteurs de sécurité (C1 à C4) pour détecter des conditions anormales de fonctionnement ou d'environnement, et un registre (RS) accessible par le microprocesseur et susceptible de mémoriser une information sur l'état des capteurs, caractérisé en ce qu'il comporte des moyens pour vérifier l'état du registre immédiatement avant chaque opération d'écriture ou effacement de la mémoire programmable, et immédiatement avant chaque transmission de donnée vers l'extérieur par le port d'entrée-sortie, et des moyens pour interrompre le fonctionnement du microprocesseur si une vérification de l'état du registre fait apparaître des conditions anormales.

2. Circuit intégré selon la revendication 1, caractérisé en ce qu'il comporte une zone de mémoire de programme (Z1) réservée pour un sous programme de transmission d'une information sur le port d'entrée sortie, le début de cette zone comportant des instructions exécutables par le microprocesseur pour effectuer une vérification de l'état du registre.

3. Circuit intégré selon l'une des revendications 1 et 2, caractérisé en ce qu'il comporte une zone de mémoire (Z2) réservée pour un sous programme d'écriture dans la mémoire programmable, le début de cette zone comportant des instructions exécutables par le microprocesseur pour effectuer une vérification de l'état du registre.

4. Circuit intégré selon l'une des revendications 1 à 3, caractérisé en ce qu'il comporte une zone de mémoire (Z3) réservée pour un sous programme d'effacement de tout ou partie de la mémoire programmable, le début de cette zone comportant des instructions exécutables par le microprocesseur pour effectuer une vérification de l'état du registre.

5. Circuit intégré selon l'une des revendications 2 à 4, caractérisé en ce que les instructions de vérification de l'état du registre comportent une instruction de branchement vers un état d'attente du microprocesseur pour le cas où une vérification de l'état du registre fait apparaître des conditions anormales, état dont le microprocesseur ne peut sortir que par réinitialisation.

## Patentansprüche

1. Integrierte Mikroprozessor-Schaltung mit einem Programmspeicher (12), einem nicht flüchtigen programmierbaren Speicher (16), wenigstens einem Eingangs/Ausgangs-Port (18) für die Verbindung der Schaltung nach außen, Sicherheitsfühler (C1 bis C4) zum Erfassen der anormalen Betriebs- oder Umgebungsbedingungen und einem über den Mikroprozessor zugänglichen Register (RS), das eine Information über den Zustand der Fühler speichern kann, dadurch gekennzeichnet, daß sie Einrichtungen zum Prüfen des Zustands des Registers unmittelbar vor jedem Schreiboder Löschvorgang des programmierbaren Speichers und unmittelbar vor jeder Datenübertragung nach außen über den Eingangs/Ausgangs-Port und Einrichtungen zum Unterbrechen des Betriebs des Mikroprozessors besitzt, wenn eine Prüfung des Zustands des Registers anormale Bedingungen aufzeigt.

2. Integrierte Schaltung nach Anspruch 1, dadurch gekennzeichnet, daß sie eine Programmspeicherzone (Z1) besitzt, die für ein Unterprogramm zur Übertragung einer Information auf den Eingangs/Ausgangs-Port reserviert ist, wobei der Anfang dieser Zone durch den Mikroprozessor ausführbare Befehle zur Durchführung einer Prüfung des Zustands des Registers umfaßt.

3. Integrierte Schaltung nach einem der Ansprüche 1 und 2, dadurch gekennzeichnet, daß sie eine Speicherzone (Z2) besitzt, die für ein Unterprogramm zum Schreiben in den programmierbaren Speicher reserviert ist, wobei der Anfang dieser Zone durch den Mikroprozessor ausführbare Befehle zur Durchführung einer Prüfung des Zustands des Registers umfaßt.

4. Integrierte Schaltung nach einem der Ansprüche 1 bis 3, dadurch gekennzeichnet, daß sie eine Speicherzone (Z3) besitzt, die für ein Unterprogramm zur Löschung des gesamten programmierbaren Speichers oder eines Teils davon besitzt, wobei der Anfang dieser Zone durch den Mikroprozessor ausführbare Befehle zur Durchführung einer Prüfung des Zustands des Registers umfaßt.

5. Integrierte Schaltung, nach einem der Ansprüche 2 bis 4, dadurch gekennzeichnet, daß die Befehle zur Prüfung des Zustands des Registers einen Befehl zum Übergang des Mikroprozessors in einen Wartezustand umfassen, wenn eine Prüfung des Zustands des Registers anormale Bedingungen aufzeigt, wobei der Mikroprozessor diesen Zustand nur durch neue Initialisierung verlassen kann.

## Claims

1. Integrated circuit with microprocessor, comprising a program memory (12), a programmable non-volatile memory (16), at least one input-output gate (18) for the connection of the circuit to the outside, safety pick-ups (C1 to C4) to detect abnormal operating or environment conditions and a register (RS) accessible by the microprocessor and capable of memorizing an item of information on the state of the pickups, characterized by the fact that it comprises means for verifying the state of the register immediately before each writing or erasing operation of the programmable memory and immediately before each transmission of data to the outside via the input-output gate, and means for interrupting the operation of the microprocessor if a verification of the state of the register brings abnormal conditions to light.

2. Integrated circuit in accordance with Claim 1, characterized by the fact that it comprises a program memory zone (Z1), reserved for a sub-program for transmission of an item of information to the input-output gate, the beginning of this zone comprising instructions which can be carried out by the microprocessor in order to verify the state of the register.

3. Integrated circuit in accordance with Claims 1 and 2, characterized by the fact that it comprises a memory zone (Z2) reserved for a sub-program for writing in the programmable memory, the beginning of this zone comprising instructions which can be carried out by the microprocessor in order to verify the state of the register.

4. Integrated circuit in accordance with Claims 1 to 3, characterized by the fact that it comprises a memory zone (Z3) reserved for a sub-program for the erasure of all or part of the programmable memory, the beginning of this zone comprising instructions which can be carried out by the microprocessor in order to verify the state of the register.

5. Integrated circuit in accordance with Claims 2 to 4, characterized by the fact that the instructions for verifying the state of the register comprise an instruction for branch connection to a stand-by state of the microprocessor, in the event of verification of the state of the register indicating that abnormal conditions prevail, from which said state the microprocessor can only emerge by re-initialization.
